# EUROPEAN PATENT APPLICATION

(11) **EP 4 674 670 A1**
(43) Date of publication of application: **07.01.2026**
(21) Application number: 25186540.8
(22) Date of filing: 01.07.2025
(51) Int. Cl.: B60L 3/10, B60L 7/18, B60L 7/26

(54) **CONTROL METHOD FOR REGENERATIVE BRAKING OF A ROAD VEHICLE WITH INDEPENDENT ELECTRIC MOTORS AND RELATED ROAD VEHICLE**

(30) Priority: 05.07.2024 IT 202400015604
(71) Applicant: FERRARI S.p.A., 41100 Modena (IT)
(72) Inventor: VARISCO, Stefano, 41100 MODENA (IT); MINCIGRUCCI, Francesca, 41100 MODENA (IT); SCIFO, Alfredo, 41100 MODENA (IT)
(74) Representative: Studio Torta S.p.A.

(57) **Abstract**

Control method for a regenerative braking of a road vehicle (1) driven by a driver (DR); the road vehicle (1) comprising four driving wheels (4, 5), arranged in pairs on a front axle (2) and/or a rear axle (3), each of which is rotatably driven by a respective electric motor (7) connected to it; the method comprises the steps of: controlling a braking system (13), following a braking request from the driver (DR), to actuate in regenerative electric braking, by delivering a respective first braking torque (eBT), each electric motor (7) according to the plurality of data (DD) on vehicular dynamics and the respective maximum braking capacity (MRT) values, so as to generate regenerative electrical energy; and storing the regenerative electrical energy generated by the regenerative braking of each driving wheel (4, 5) in a vehicular electrical energy storage system (16).

## Description

### CROSS-REFERENCE TO RELATED APPLICATIONS

This patent application claims priority from Italian patent application no. 102024000015604 filed on July 5, 2024, the entire disclosure of which is incorporated herein by reference.

### TECHNICAL FIELD

The present invention relates to a control method for regenerative braking of a road vehicle with independent electric motors acting on at least two wheels, in particular on four wheels; the present invention also relates to a related road vehicle configured to perform such method.

### PRIOR ART

Methods are known for the regeneration, by means of the so-called regenerative braking, of electrical energy in vehicles equipped with electric propulsion provided by high-voltage batteries.

It is, in fact, known that a part of the braking action, normally allocated to the effect of friction between a brake pad placed in contact with a brake disc by means of the action of a hydraulic force produced by the driver (by pressing on the brake pedal) and assisted by various technical solutions (brake boosters, hydraulic pumps), is supported by an electric braking exerted by an electric motor placed in mechanical connection with the wheels (according to various architectural layouts that are known and not further detailed below).

Generally, the energy regenerated in this manner by the aforesaid electric motor is reintroduced into the high-voltage battery, causing the effect of increasing its state of charge (SOC) for a future return in situations of electric propulsion.

According to the solutions of the prior art, the regeneration of electrical energy is considerably limited, especially in high-performance vehicles, so as not to exceed a predetermined deceleration value (even when the vehicle is equipped with a powertrain system with absorption potential higher than said predetermined value).

Furthermore, the solutions of the prior art provide for a fixed division between the front and rear axle, which has not always proved to be optimal, limiting the energy regeneration potential and therefore the performance of the road vehicle.

In addition, according to the architectures of the known type, the regeneration of energy is sized to be fixed in standard braking conditions, and to be disabled in conditions of braking with ABS, providing, in these cases, for modulating the braking force exclusively by means of the hydraulic/mechanical circuit that manages conventional brakes.

However, in high-performance vehicles, there could be an over-abundance of regenerated energy, due to the major accelerations in play, and this can determine a factor of absolute importance even in performance.

There is therefore a need for an improved system of management of the electrical energy, which becomes an important resource not only in terms of distribution of the electric torque to the motors, but also in terms of regeneration of the electrical energy in braking. In fact, having a greater quantity of energy available allows the performance on the track to be improved, for example by allowing the supply of a greater torque in acceleration for completion of a race.

Document US2018257656A1 describes a system for operation of the transmission of a hybrid vehicle that comprises an internal combustion engine, an electric motor and a transmission, in which the regenerative torque and the torque of an electronically-controlled differential clutch are adjusted to increase the use of the kinetic energy of the vehicle.

Document EP4385790A1 describes a control method for controlling the torque to the wheels on electric vehicles with differentiated braking.

### DESCRIPTION OF THE INVENTION

The object of the present invention is to provide a control method for regenerative braking of a road vehicle with independent electric motors acting on at least two (in particular four) wheels and a related road vehicle, which are free of the drawbacks described above, are easy and economical to manufacture and, in particular, allow performance to be maximised during travel on a track, without making the road vehicle unstable.

According to the present invention, a control method for regenerative braking of a road vehicle with independent electric motors acting on at least two (in particular four) wheels and a related road vehicle is provided, according to what is claimed in the independent claims that follow and, preferably, in any one of the claims that are directly or indirectly dependent upon the independent claims.

The claims describe preferred embodiments of the present invention and form an integral part of this description.

### BRIEF DESCRIPTION OF THE DRAWINGS

The present invention will now be described with reference to the appended drawings, which illustrate a non-limiting embodiment thereof, wherein:

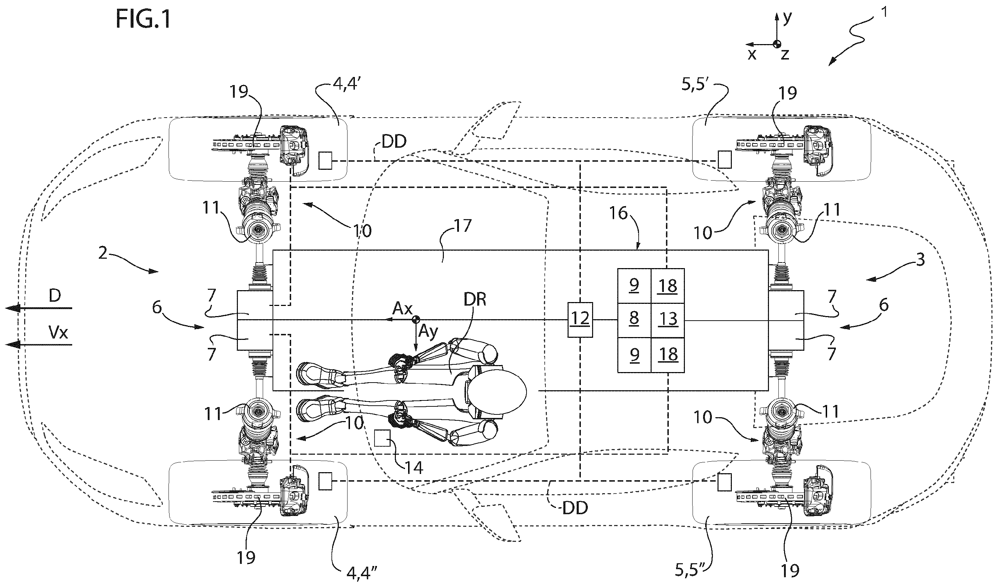

- Figure 1 is a schematic and plan view of a road vehicle according to the present invention and provided with four separate and independent motors;

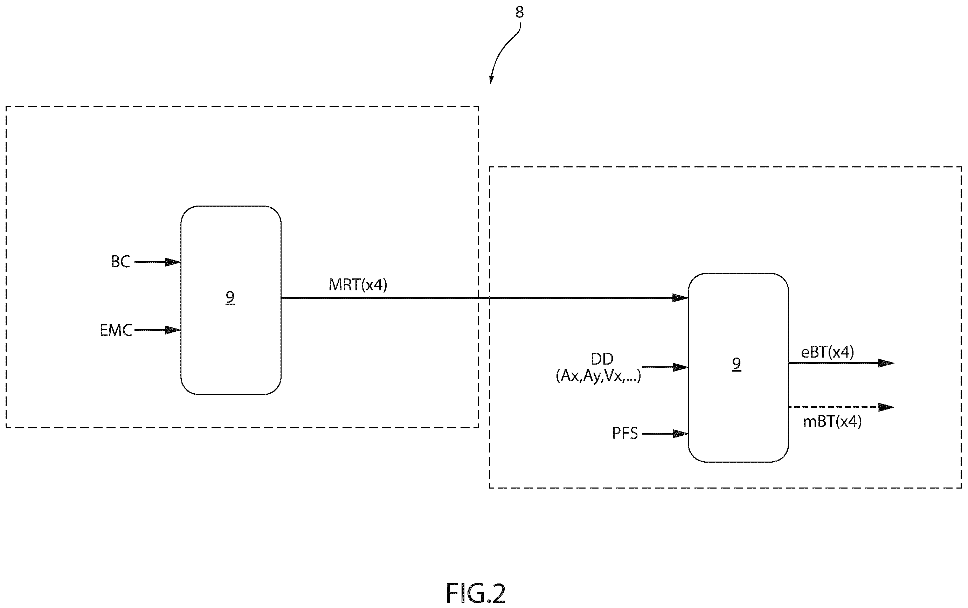

- Figure 2 is a schematic diagram of a non-limiting embodiment of the method according to the present invention;

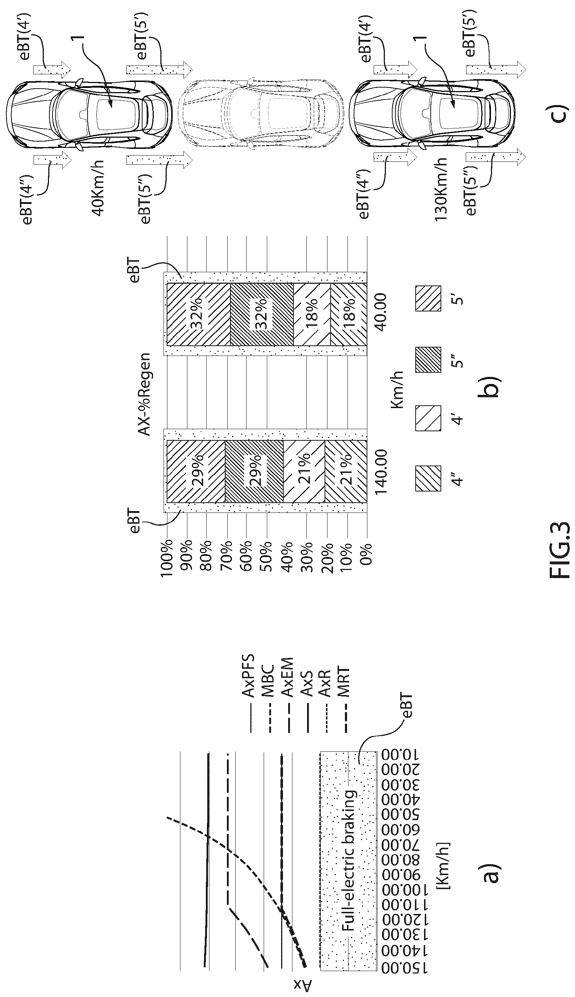

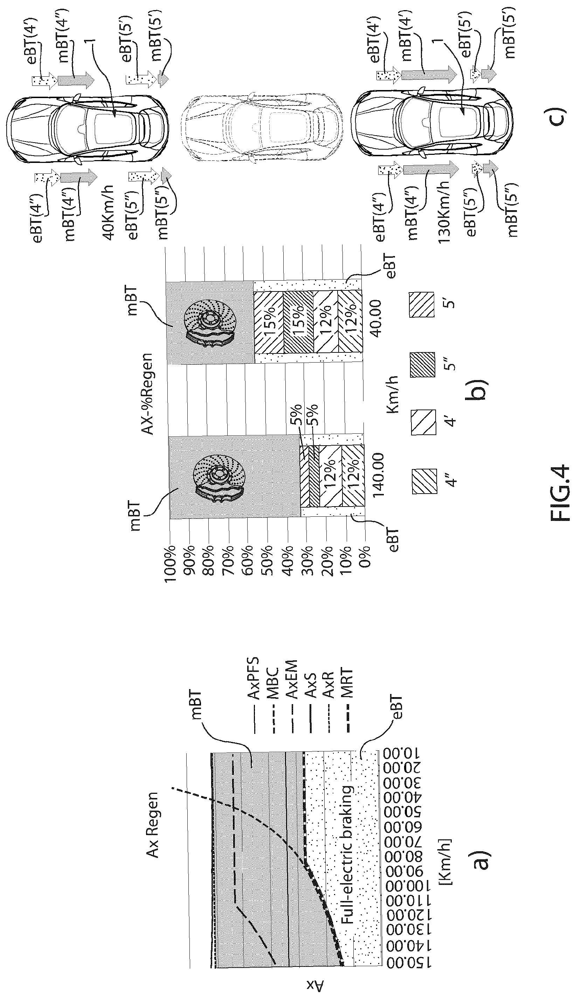

- Figures 3 and 4 show diagrams and phases of a braking of the vehicle of Figure 1 on a straight road and in two different configurations, in a slight braking in Figure 3 and in an aggressive braking in Figure 4; in particular, each of these figures shows a graph of the trend of different accelerations with respect to the speed on the left-hand side, a bar chart relating to distribution of the electric and/or hydraulic braking in the centre, and a schematic illustration of the regenerative braking torque for each wheel in different phases of the same braking on a straight road on the right-hand side;

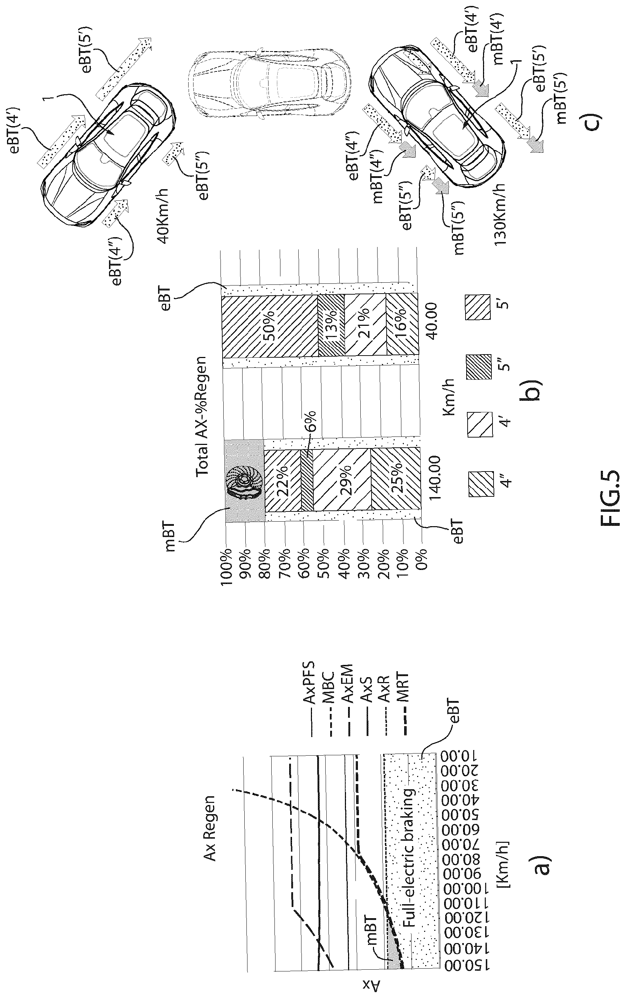

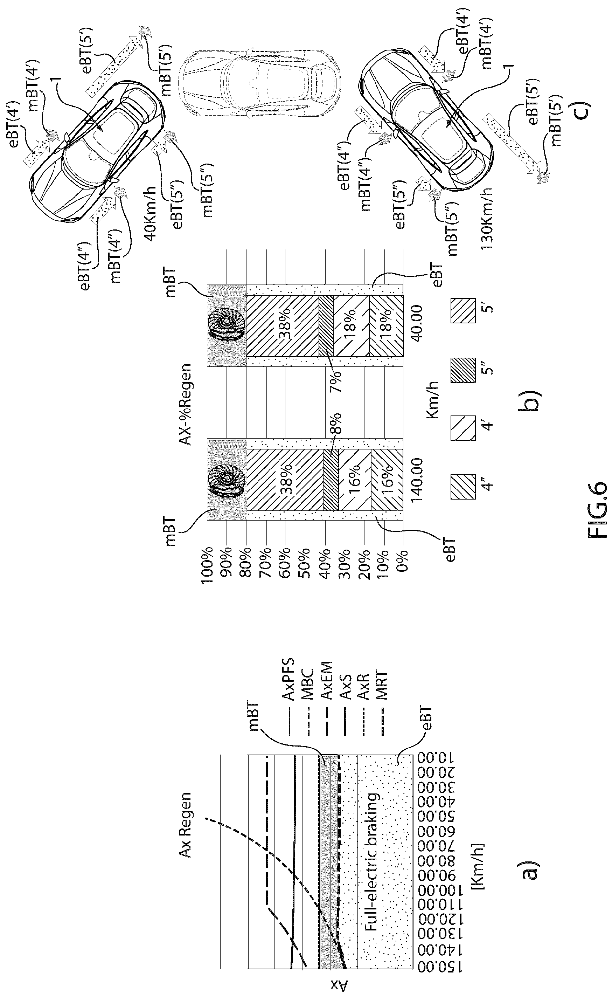

- Figures 5 and 6 show diagrams and phases of a braking of the vehicle of Figure 1 on a curve and in two different configurations, in a slight braking in Figure 5 and in an aggressive braking in Figure 6; in particular, each of these figures shows a graph of the trend of different accelerations with respect to the speed on the left-hand side, a bar chart relating to distribution of the electric and/or hydraulic braking in the centre, and a schematic illustration of the regenerative braking torque for each wheel in different phases of the same braking on a curve on the right-hand side.

### PREFERRED EMBODIMENTS OF THE INVENTION

In Figure 1, the number 1 indicates, in its entirety, a road vehicle, in particular a motor vehicle, provided with a front axle 2 and a rear axle 3.

The same reference numbers and reference letters in the figures identify the same elements or components with the same function.

In this description, the term "second" component does not imply the presence of a "first" component. Such terms are, in fact, adopted as labels to improve clarity and should not be intended as limiting.

The elements and features illustrated in the different preferred embodiments, including the drawings, may be combined with each other without deviating from the scope of protection of this application as described below.

It is specified that, in the description that follows, expressions such as "above", "below", "front", "rear" and similar are used with reference to conditions of normal travel of the road vehicle 1 along the normal direction of travel D.

As shown in the non-limiting embodiment of Figure 1, it is also possible to define:
- a longitudinal axis X, integral with to the vehicle 1 and arranged, in use, horizontal and parallel to a normal direction of travel D of the vehicle 1;
- a transverse axis Y, integral with to the vehicle 1 and arranged, in use, horizontal and orthogonal to the axis X; and
- a vertical axis Z, integral with to the vehicle 1 and arranged, in use, vertical and orthogonal to the axes X, Y.

The road vehicle 1 comprises four wheels 4, 5 divided into pairs between the front axle 2 and the rear axle 3. In detail, of the four wheels 4, 5, at least two, in particular all four, are driving wheels. In other words, the vehicle 1 comprises two front (driving) wheels 4, forming part of the front axle 2, and two rear (also driving) wheels 5, forming part of the rear axle 3. In particular, the vehicle 1 can be front-wheel drive, i.e. with only the front wheels 4 being driving wheels, rearwheel drive, i.e. with only the rear wheels 5 as driving wheels, or four-wheel drive, with all the wheels 4, 5 being driving wheels, as illustrated in the non-limiting embodiment of the appended drawings.

The vehicle further comprises a powertrain system 6, which in turn comprises two or four electric motors 7 (based on the number of driving wheels 4, 5 and the type of direct or indirect implementation - through a differential), each of which is connected to a respective wheel 4, 5 by an opportune transmission system that allows the torque provided by each wheel 4, 5 to be varied independently and in an adjustable manner according to predetermined logics. For this purpose, according to several non-limiting embodiments, respective electric motors 7 are present for each wheel, whereas according to other non-limiting embodiments, an active differential (known and therefore not further detailed below) is present which allows different torques to be delivered to (and received from) the wheels of a same axle 3 or 4.

In particular, according to a preferred but non-limiting embodiment, each wheel 4, 5 is rotatably driven by a respective electric motor 7 connected to it.

The electric motors 7 are mechanically coupled to the wheels 4, 5 and are configured to deliver and receive driving torque to or from the wheels 4, 5 themselves, based on the drive function or generative function that are exerted respectively in acceleration and braking.

Each wheel 4 or 5 is mechanically connected to a chassis of the road vehicle 1 by means of a suspension 10 (partially illustrated in Figure 1), which is provided with an electronically controlled shock absorber 11, i.e. provided with an electric actuator that allows the damping of the electronically controlled shock absorber 11 to be varied (i.e. increased or decreased). By way of example, the electric actuator of each electronically controlled shock absorber 11 could comprise one or more solenoid valves that modulate the size of the holes for passage of the oil inside the electronically controlled shock absorber 11, or could comprise a magnetorheological fluid that alters its physical properties as a function of a magnetic field applied.

In addition, the vehicle 1 comprises electronic control circuitry 8, which comprises one or more electronic control or computation units 9 ("ECU") which, among other things, regulate the behaviour of the road vehicle 1 both on a straight road and when travelling around a curve, intervening, as described in further detail below, on the torque generated by the electric motors 7 thanks to the driving wheels 4, 5 in deceleration. Physically, the control circuitry 8 may comprise a single device or several devices separate from each other and communicating by means of the CAN network of the road vehicle 1.

Advantageously, the electronic control circuitry 8 is configured to estimate, for each driving wheel 4, 5, independently of the other driving wheels 4, 5, a respective grip factor (G) on the ground travelled by the road vehicle 1. In particular, the grip factor G on the ground is calculated using known methods and is therefore not further detailed below. Such grip factor G can be both estimated and detected according to known techniques, as described, for example, in Italian patent application 102021000020948 filed by the same Applicant.

Furthermore, the electronic control circuitry 8 can be configured to define or detect, for each driving wheel 4, 5, independently of the other driving wheels 4, 5, a respective vertical load Fz acting on it. In particular, the load Fz is also defined or detected by means of known techniques that therefore are not further detailed below (i.e. by measuring the load, or force Fz, with special sensors or by estimating it through modelling of the road vehicle 1), as described, for example, in Italian patent application 102021000020948 filed by the same Applicant.

The electronic control circuitry 8 is also configured to compute, for each driving wheel 4, 5, a value of a maximum braking capacity MRT (regenerative, i.e. maximum regenerative torque) depending at least on the respective grip factor G and the respective vertical load Fz. In particular, the maximum braking capacity is determined using known methods and is therefore not further detailed below.

The vehicle 1 further comprises a collection system 12 for collecting data DD, which is connected to the control circuitry 8 and is configured to collect a plurality of data DD on vehicular dynamics. In particular, the data DD collected by the data collection system 12 comprises at least the speed Vx (longitudinal) of the vehicle 1, which is preferably, but not in a limiting manner, collected by means of speed sensors arranged at the wheels 4, 5; the requests of the driver DR, for example how long and in what way an accelerator or brake pedal is pressed or the steering wheel turned; and the longitudinal accelerations Ax and transverse accelerations Ay, for example collected by means of one or more inertia measurement units (known in themselves and not detailed further), of the road vehicle 1.

The road vehicle 1 further comprises a braking system 13, itself comprising at least one braking element 14 that can be actuated by the driver to demand braking, in particular a brake pedal 15. In detail, the braking system 14 is connected to the control circuitry 8 and is configured to be controlled by it.

Advantageously, the control circuitry 8 is further configured to control the braking system 13, following a braking demand from the driver DR via the braking element 14, to actuate in regenerative electric braking, by delivering a respective first braking torque eBT (electrical), each electric motor 7, according to the plurality of data DD on vehicular dynamics and respective maximum braking capacity MRT values (for each wheel), so as to generate regenerative electrical energy. In other words, for example, when the driver presses the brake pedal 15, the control circuitry 8, in particular the control unit 9, controls in braking each of the electric motors 7 with a respective electric braking torque eBT (or counterelectromotive force), thanks to which it is possible to generate, using the electric motors 7 as generators, regenerative electrical energy, i.e. regenerated by converting the kinetic energy of the driving wheels 4, 5 into electrical energy during braking.

In conclusion, the electronic control circuitry 8 is configured to store the aforesaid regenerative electrical energy generated by the regenerative braking of each wheel 4, 5 in a vehicular electrical energy storage system 16 (common between the wheels 4, 5), in particular a vehicular battery pack 17. In other words, the energy generated during braking thanks to the electric motors 7 converges into a main battery pack 17 of the road vehicle 1, for subsequent use in the acceleration phase, so as to increase performance, for example on exiting from a curve on a track.

Advantageously but not in a limiting manner, the braking system 13 also comprises a hydraulic unit 18, and mechanical brakes, controlled by the hydraulic unit 18. In detail, the control circuitry 8 is configured to control the braking system 13 so as to actuate, to aid in the regenerative braking generated by the electric motors 7, i.e. in addition to the respective first braking torque eBT, the hydraulic unit 18 to exert a second braking torque hBT on each wheel 4, 5.

In accordance with a further aspect of the present invention, a control method for regenerative braking of a road vehicle driven by a driver is provided.

Advantageously but not in a limiting manner, the road vehicle 1, in particular the control circuitry 8, is configured/programmed to perform the method described below.

The method comprises the steps of:
- estimating, by means of the control circuitry 8, in particular by means of at least one of the control or computation units 9, for each driving wheel 4, 5, independently of the other driving wheels 4, 5, the respective grip factor G on the ground travelled by the road vehicle 1;
- defining or detecting, by means of the control circuitry 8, in particular by means of at least one of the control or computation units 9, for each driving wheel 4, 5, independently of the other driving wheels 4, 5, a respective vertical load Fz acting on it;
- computing, by means of the control circuitry 8, in particular by means of at least one of the control or computation units 9, for each driving wheel 4, 5, the value of the maximum braking capacity MRT depending at least on the respective grip factor G and the respective vertical load Fz;
- collecting, by means of the collection system 12 for collecting data DD, a plurality of data DD on vehicular dynamics;
- controlling, by means of the control circuitry 8, in particular by means of at least one of the control or computation units 9, the braking system 13, following a braking request from the driver (for example via the brake pedal 15), to actuate in regenerative electric braking, by delivering a respective first braking torque eBT, each electric motor 7, according to the plurality of data DD on vehicular dynamics and the respective maximum braking capacity MRT values, so as to generate regenerative electrical energy;
- storing the regenerative electrical energy generated by the regenerative braking of each wheel 4, 5 in the storage system 17.

Preferably but not in a limiting manner, during the phase of controlling the braking system 13, at least one right wheel 4', 5' and one left wheel 4", 5'' of the same front axle 2 or rear axle 3 are controlled independently of each other, distributing the braking in percentage differentially between them. In other words, the first electric braking torque eBT commanded to the right wheel 4', 5' differs from the first electric braking torque eBT commanded to the left wheel 4", 5". Accordingly, the electrical energy generated by the right wheel 4', 5' differs with respect to the one generated by the left wheel 4", 5". Regardless of this difference, the electrical energy is preferably stored in the storage system 16 in order to be delivered to any one of the electric motors 7.

In several preferred but non-limiting cases, during a curve 19 (as shown schematically in Figures 5 and 6), the one between the right wheel 4', 5' and the left wheel 4", 5'' of the same front axle 2 or rear axle 3 that is on the outside of the curve 19 (in the case of Figures 5 and 6, since this is a curve 19 to the left, the external wheels are the right wheels 4', 5'), delivers more first braking torque eBT than the wheel (in the case of Figures 5 and 6, since this is a curve 19 to the left, the external wheels are the left wheels 4", 5") of the same axle 2, 3 that is on the inside of the curve 19.

As an alternative or in addition, during the step of controlling the braking system, the wheels 4 (i.e. 4' and 4'') of the front axle 2 and the wheels 5 (i.e. 5' e 5") of the rear axle 3 are controlled independently from each other, distributing the braking differentially, for example in percentage, between the front axle 2 and the rear axle 3. In other words, the first electric braking torque eBT commanded to the front wheels 4 differs from the first electric braking torque eBT commanded to the rear wheels 5. Accordingly, the electrical energy generated by the front wheels 4 differs with respect to the one generated by the rear wheels 5. Regardless of this difference, the electrical energy is preferably stored in the storage system 16 in order to be delivered to any one of the electric motors 7.

In the non-limiting embodiments of the appended Figures 5 and 6, the control circuitry 8 controls differentially both the supply of the first electric braking torque eBT between the front axle 2 and the rear axle 3 and between the right wheels 4', 5' and the left wheels 4", 5".

Advantageously but not in a limiting manner, as illustrated in the right-hand sections of Figures 3 to 6, the respective electric braking torque eBT delivered to at least one wheel 4, 5 (in particular to all the wheels 4, 5, or at least divided by axle pair 2, 3) is variable dynamically over time (during braking, i.e. while the driver demands braking via the pedal).

In particular, the electric braking torque eBT is variable with update frequencies greater than 3 Hz, particularly greater than 5 Hz; more particularly with update frequencies of 10 Hz or more.

Advantageously but not in a limiting manner, therefore, the respective first braking torque eBT delivered by one wheel 5 (i.e. 5', 5''), in particular by both wheels 5, 5', 5", of the rear axle 3 remains constant or preferably increases as time passes during braking, as the longitudinal speed Vx of the road vehicle 1 decreases.

Preferably but not in a limiting manner, the respective first braking torque eBT delivered by one wheel 4 (i.e. 4', 4"), in particular by both wheels 4, 4', 4'', of the front axle 4 remains constant or preferably decreases as time passes during braking, as the speed Vx of the road vehicle 1 decreases.

According to several preferred but non-limiting embodiments, as illustrated in the appended drawings, the method further comprises a step of controlling the braking system 14 so as to actuate, to aid in regenerative braking, in addition to the respective first braking torque eBT, the hydraulic unit 18 to exert a second braking torque mBT on each wheel 4, 5, in particular at least partially simultaneously with the first braking torque.

According to several non-limiting embodiments not shown, above a certain longitudinal speed Vx of a certain braking request by the driver, the first braking torque eBT is exerted with a delay with respect to the second braking torque mBT, which enters into operation first.

In particular, the second braking torque mBT delivered by the hydraulic unit 18 is uniform for each wheel 4, 5 of the front axle 2 or the rear axle 3, respectively. In other words, wheels of the same axle 2, 3 are braked in the same way by the respective mechanical brakes.

In several preferred but non-limiting cases, the second braking torque mBT delivered by the hydraulic unit 18 is different between the torque mBT of the wheels 4 of the front axle 2 and the torque mBT of the wheels 4 of the rear axle 3.

Advantageously but not in a limiting manner, the control circuitry 8 is configured to perform the method described in the present description.

In accordance with what has previously been said, therefore, the braking potential of each individual wheel 4, 5 depends on the grip factor G, the vertical load Fz applied on the wheel 4, 5 (or on the respective tyre) and also on any presence of lateral engagement required by the tyre itself (acceleration Ay).

As a result, in dynamic load transfer conditions, such as braking on a straight road (where the load is transferred towards the front axle 2) or braking on a curve (where the load is once again transferred towards the front axle 2, but with a requirement for lateral force on the tyres of the wheels 4, 5, to limit the braking capacity itself), the control circuitry 8 controls the electric motors 7 and the hydraulic unit 18 by dynamically adjusting the portion, i.e. the percentage, of hydraulic braking with respect to electric braking, i.e. the second torque mBT with respect to the first torque eBT, based on the specific conditions of each individual wheel 4, 5.

Therefore, according to the embodiments described above or a combination thereof, having available an estimator (of known type) of the overall braking capacity of each wheel 4, 5, it is therefore possible (in the absence of ABS control) to distribute the braking action in an improved way (by calibrating the torques eBT and mBT) and maximising the energy regeneration (if a fixed distribution were, in fact, to be excessive for an individual wheel 4, 5, its reduction or elimination would have to be performed on the entire braking axle 2, 3, losing the possible contribution of the other wheel of the same axle 2, 3).

In the non-limiting embodiment of Figure 2, a portion of the control circuitry 8 is schematically illustrated, comprising two control or computation units 9. Following the information flow (indicated by the arrows), the first control unit 9 receives as an input a signal BC relating to the conditions (model, size and status) of the battery pack 17 (and its limits) and an EMC signal, relating to the conditions (model, size and status) of the electric motors 7 (and their limits). Based on such incoming signals, the control unit 9 computes, for each wheel 4, 5 (i.e. four values), the maximum electric braking capacity MRT, which is expressed preferably as the maximum braking torque deliverable by the electric motors 7, also taking into consideration the battery pack 17 (therefore considering the grip factor G and the vertical loads Fz for each wheel).

The four values of maximum braking capacity MRT are provided as an input to the second control unit 9 (which may also physically coincide with the first), together with the data DD on dynamics of the road vehicle 1 and a PFS signal relating to the limitations imposed by functional safety of the road vehicle 1 (the so-called Automotive functional safety or FuSa, defined for example by ISO 26262). In addition to these signals, the grip factor G, calculated or estimated as described above and as known, is also considered. Based on the incoming signals, the control unit 9 computes distribution of the regenerative braking between the wheels 4, 5, i.e. the combination of the respective first torques eBT and possibly the second torques mBT, if necessary, for a more aggressive braking.

The non-limiting embodiments of Figures 3 to 6 show three different sections a), b) and c). Section a) shows a graph having as the x-axis the longitudinal speed Vx in km/h and as the y-axis the longitudinal acceleration Ax. The profiles indicated on that graph are: AxPFS (i.e. maximum acceleration linked to the PFS signal relating to the FuSa limits), MBC (i.e. maximum acceleration linked to the BC signal relating to the limits of the battery pack 17), AxEM (i.e. maximum acceleration linked to the EM signal relating to the electric motors 7), AxS (i.e. maximum acceleration linked to the signal G relating to the grip factor), AxR (i.e. acceleration requested by the driver DR via the brake pedal 14) and MRT (i.e. maximum braking capacity described above). In conclusion of the graph, the underlying areas (therefore the integrals) that define the first electric braking torque eBT and any second hydraulic braking torque mBT (in Figures 4 to 6) are added to these profiles.

Section b), on the other hand, shows, in a non-limiting manner, by means of a bar chart having as the x-axis the longitudinal speed Vx and as the y-axis the percentage distribution of the braking torque, the relative distribution of the electric and hydraulic braking torques (the latter fixed and constant) between the wheels 4, 5, as a function of the vehicular dynamics.

In conclusion, section c) schematically illustrates the road vehicle 1 in two different and successive periods of time, respectively an initial phase of braking at 140 km/h and a final phase of braking at 40 km/h.

As indicated above, the embodiments of Figures 3 to 6 illustrate examples of non-limiting embodiments. In particular, the percentage distribution of braking torque follows predetermined logics based on the configuration of the powertrain system.

For example, in general, in the case in which there is only one electric axle, the percentage distribution of the electric braking torque is independently adjustable between the right wheel 4', 5' and the left wheel 4", 5'' (whether front or rear axle 6 or 7). This diversified distribution of the braking torque can be delivered both by means of a single electric motor 7 connected to an active differential, itself connected to the wheels, or by means of two respective electric motors 7, one for each wheel 4, 5 of the same axle.

For example, in the case in which both axles 6, 7 are electric, the percentage distribution of the electric braking torque is independently adjustable between the right wheel 4', 5' and the left wheel 4", 5'' (whether front or rear axle 6 or 7) of both axles 6, 7. This diversified distribution of the braking torque can be delivered both by means of a single electric motor 7 for each electric axle connected to an active differential, itself connected to the wheels, or by means of four respective electric motors 7, one for each wheel 4, 5. In this manner, it is possible to adjust independently both the relative percentage distribution between the wheels of the same axle and between the two different axles 6,7, so as to optimise/maximise the axles regenerative electrical energy in different situations (straight road, curve, ascent, descent, sloping road or a combination thereof).

By way of example, the specific features of each non-limiting situation illustrated in Figures 3 to 6 will now be described.

In Figure 3, it can be noted how the braking acceleration AxR requested by the driver DR is not very marked. Therefore, in this case, braking is managed by the control circuitry 8 entirely by means of the electric motors 7, which are activated in braking by delivering for each the respective first braking torque eBT. As emerges from this drawing, despite the quantity of electric braking torque eBT remaining constant (see section a)), the distribution is variable over time, during braking. In particular, the electric braking contribution of the front axle 2 is reduced, increasing, preferably in a complementary way, the one of the rear axle 3. In this case, as this is a straight road situation, the contribution between one axle and the other is diversified, also varying it over time, but not between the two wheels belonging to the same axle. In particular, it appears clear that the variations indicated here above are to be considered in relative terms with respect to the respective previous value of the braking torque percentage of the respective wheel 4,5 or axle 6, 7.

In the non-limiting embodiment of Figure 4, on the other hand, it can be noted how the braking acceleration AxR requested by the driver DR is particularly marked, in particular up until it almost reaches the limit acceleration AxS of the grip factor G. In this case, in contrast with the previous one, the control circuitry 8 manages braking partially by means of the electric motors 7, which are actuated in braking by delivering for each the respective first braking torque eBT, and partially by means of the hydraulic unit 18 and the mechanical brakes 19 (which brake uniformly between the wheels 4, 5, or at most differentially in a fixed manner by axle). As emerges from this drawing, the quantity of electric braking torque eBT is this time variable in a first section and constant in a second section (see section a)). Furthermore, as emerges from sections b) and c) (thanks to the illustrative arrows), distribution is also variable over time in this case, during braking. In particular, the electric braking contribution of the front axle 2 remains constant and the contribution of the hydraulic unit 18 and the mechanical brakes 19, and therefore of the mechanical torque mBT, is reduced, increasing in a complementary manner the electric contribution of the rear axle 3, which gains precisely what is ceded by the hydraulic unit 18. In particular, it appears clear that, in this case as well, the variations indicated here above are to be considered in relative terms with respect to the respective previous value of the braking torque percentage of the respective wheel 4,5 or axle 6, 7. In this case, not limiting, as this is a straight road situation, the contribution between one axle and the other is diversified, also varying it over time, but not between the two wheels belonging to the same axle.

The case is different in Figures 5 and 6, which show a variation in distribution of the first electric braking torque eBT also between the wheels 4', 4'' and 5', 5'' belonging to the same axle. In these cases, as in the previous one, the control circuitry 8 manages braking partially by means of the electric motors 7, which are actuated in braking by delivering for each the respective first braking torque eBT, and partially by means of the hydraulic unit 18 and the mechanical brakes 19 (which brake uniformly between the wheels 4, 5, or at most differentially in a fixed manner by axle).

As emerges from the non-limiting embodiment of Figure 5, the quantity of electric braking torque eBT is variable in a first section and constant in a second section (see section a)). Furthermore, as emerges from sections b) and c) (thanks to the illustrative arrows), distribution is also variable over time in this case, during braking. In particular, the electric braking contribution of the wheels 4', 5' on the outside of the curve is greater than the contribution of the wheels 4", 5'' on the inside of the curve. Furthermore, although there is initially a mechanical contribution given by the second braking torque mBT, and therefore by the hydraulic unit 18, during braking this contribution is reduced up to the point of disappearing, increasing in a complementary way the electric contribution, which gains precisely what is ceded by the hydraulic unit 18. In particular, the contribution provided by the rear axle 3 is increased and the contribution of the front axle 2 is reduced. In particular, it appears clear that, in this case as well, the variations indicated here above are to be considered in relative terms with respect to the respective previous value of the braking torque percentage of the respective wheel 4,5 or axle 6, 7. In this case, not limiting, as this is a curve situation, not only is the contribution between one axle and the other diversified, also varying it over time, but also the one between the two wheels belonging to the same axle, also varying this over time.

As emerges from the non-limiting embodiment of Figure 6, the quantity of electric braking torque eBT is variable in a brief first section and constant in a second section (see section a)). Furthermore, as emerges from sections b) and c) (thanks to the illustrative arrows), distribution is also variable over time in this case, during braking. In particular, the electric braking contribution of the wheels 4', 5' on the outside of the curve is greater than the contribution of the wheels 4", 5'' on the inside of the curve. Furthermore, there is also a mechanical contribution given by the second braking torque mBT, and therefore by the hydraulic unit 18; during braking this contribution decreases slightly, increasing in a complementary way the electric contribution, which gains precisely what is ceded by the hydraulic unit 18. In particular, the contribution provided by the rear axle 3 is reduced and the contribution of the front axle 2 is increased. In particular, it appears clear that, in this case as well, the variations indicated here above are to be considered in relative terms with respect to the respective previous value of the braking torque percentage of the respective wheel 4,5 or axle 6, 7. In this case, not limiting, as this is a curve situation, not only is the contribution between one axle and the other diversified, also varying it over time, but also the one between the two wheels belonging to the same axle, also varying this over time.

It is therefore also possible experimentally to define different distribution strategies of the torque eBT and the torque mBT, based on those that are the aforementioned factors examined.

Although the invention described here above makes particular reference to an example of a precise embodiment, it is not to be considered as limited to said example of an embodiment, as its scope includes all those variants, changes or simplifications covered by the appended claims, such as, for example, a different torque distribution strategy, a lower number of driving wheels, etc.

The method and the vehicle described above offer numerous advantages.

In the first place, variable distribution of the braking action performed by the electric motors on each individual wheel, depending on the dynamic situation, maximises or improves the regenerative electrical energy during braking, also avoiding penalising the control action in a dynamic situation.

In conclusion, the control method described above is simple and economical to implement in a road vehicle 1 provided with a motor for each driving wheel, as it does not require the addition of any physical component and is completely obtainable via software in vehicles provided with at least two electric motors. It is important to observe that the control method described above does not involve either a high computation capacity, nor an extended quantity of memory and it can therefore be implemented in a known control unit without the need for updates or upgrades.

### LIST OF REFERENCE NUMBERS OF THE FIGURES

- 1: road vehicle
- 2: front axle
- 3: rear axle
- 4: front wheels
- 4': right front wheel
- 4": left front wheel
- 5: rear wheels
- 5': right rear wheel
- 5": left rear wheel
- 6: powertrain system
- 7: electric motors
- 8: control circuitry
- 9: control or computation unit
- 10: suspension
- 11: shock absorber
- 12: data collection system
- 13: braking system
- 14: braking element
- 15: brake pedal
- 16: storage system
- 17: battery pack
- 18: hydraulic unit
- 19: mechanical brakes
- Ax: longitudinal acceleration
- AxEM: maximum EMC acceleration
- AxPFS: maximum PFS acceleration
- AxR: requested
- AxS: stability
- Ay: transverse
- BC: battery operating conditions
- DD: data on dynamics
- DR: driver
- eBT: first electric braking torque
- EMC: electric motor condition
- Fz: vertical load
- G: grip factor
- MBC: maximum BS acceleration
- mBT: second mechanical braking torque
- MRT: maximum braking capacity
- PFS: priority functions and safety limitation
- Vx: longitudinal speed
- X: axis
- Y: axis
- Z: axis

## Claims

1. Control method for a regenerative braking of a road vehicle (1) driven by a driver (DR); the road vehicle (1) comprising four wheels (4, 5), of which two or four wheels (4, 5) are driving, arranged in pairs on a front axle (2) and/or a rear axle (3), each of which is rotatably driven by a respective electric motor (7) connected to it; the method comprises the steps of:
- estimating, for each driving wheel (4, 5), independently of the other driving wheel(s) (4, 5), a respective grip factor (G) on the ground travelled by the road vehicle (1);
- defining or detecting, for each driving wheel (4, 5), independently of the other driving wheel(s) (4, 5), a respective vertical load (Fz) acting on it;
- computing, for each driving wheel (4, 5), a value of a maximum braking capacity (MRT) depending at least on the respective grip factor (G) and the respective vertical load (Fz);
- detecting a plurality of data on vehicular dynamics;
- controlling a braking system (13), following a braking demand from the driver (DR), to actuate in regenerative electric braking, by delivering a respective first braking torque (eBT), each driving wheel and then the respective electric motor (7), according to the plurality of data (DD) on vehicular dynamics and the respective maximum braking capacity (MRT) values, so as to generate regenerative electrical energy;
- storing the regenerative electrical energy generated by the regenerative braking of each driving wheel (4, 5) in a vehicular electrical energy storage system (16).

2. Method according to claim 1, wherein during the phase of controlling the braking system (13), at least one right and one left driving wheel (4, 5) of the same front and/or rear axle (2) are controlled independently of each other, distributing the braking between them differentially.

3. Method according to claim 2, wherein during a curve, the one between the right driving wheel and the left driving wheel (4, 5) of the same front and/or rear axle (2, 3) that is on the outside of the curve delivers more first braking torque (eBT) than the driving wheel (4, 5) of the same axle that is on the inside of the curve.

4. Method according to any one of the preceding claims, wherein the driving wheels (4, 5) are four, and wherein during the phase of controlling the braking system (13), the wheels (4, 5) of the front axle (2) and the wheels (4, 5) of the rear axle (3) are controlled independently of each other, distributing the regenerative braking differentially between the front axle (2) and the rear axle (3).

5. Method according to any one of the preceding claims, wherein the respective braking torque delivered by a wheel (4, 5) is dynamically time-varying, particularly with update frequencies greater than 5 Hz; more particularly with update frequencies of 10 Hz or more.

6. Method according to claim 5, wherein the respective first braking torque (eBT) delivered by one wheel (4, 5), particularly both wheels (4, 5), of the rear axle (3) remains constant or increases relative to its previous percentage value as time passes during braking, as the speed of the road vehicle (1) decreases.

7. Method according to any one of claims 5 or 6, wherein the respective first braking torque (eBT) delivered by one wheel (4, 5), particularly both wheels (4, 5), of the front axle (2) remains constant or decreases relative to its previous percentage value as time passes during braking, as the speed of the road vehicle (1) decreases.

8. Method according to any one of the preceding claims and comprising the step of controlling the braking system (13) so as to actuate, to aid in regenerative braking, in addition to the respective first braking torque (eBT), a hydraulic unit (18) to exert a second braking torque (mBT) on each wheel (4, 5) .

9. Method according to claim 8, wherein the second braking torque (mBT) delivered by the hydraulic unit (18) is uniform for each wheel (4, 5) of the front axle (2) or the rear axle (3), respectively.

10. Method according to claim 8 or 9, wherein the second braking torque (mBT) delivered by the hydraulic unit (18) is different between the wheel torque (4, 5) of the front axle and the wheel torque (4, 5) of the rear axle.

11. Method according to any one of claims 8 to 10, wherein the second braking torque (mBT) remains constant or decreases with the passage of time during braking as the speed of the road vehicle (1) decreases.

12. Electric road vehicle (1) comprising:
- a front axle (2) and a rear axle (3);
- four wheels (4, 5), of which two or four driving wheels (4, 5) arranged in pairs on a front axle (2) and/or a rear axle (3);
- a powertrain system (6) comprising two or four electric motors (7), or alternatively one or two electric motors connected to active differentials which in turn are each connected to two driving wheels (4, 5), each of the electric motors (7) being connected to a respective wheel (4, 5) or two wheels in the case of active differentials being present; where each wheel (4, 5) is rotatably driven by the respective electric motor (7) connected to it;
- an electronic control circuitry, which is configured for:
o estimating, for each driving wheel (4, 5), independently of the other driving wheel(s) (4, 5), a respective grip factor (G) on the ground travelled by the road vehicle (1);
o defining or detecting, for each driving wheel (4, 5), independently of the other driving wheel(s) (4, 5), a respective vertical load (Fz) acting on it;
o computing, for each driving wheel (4, 5), a value of a maximum braking capacity (MRT) depending at least on the respective grip factor (G) and the respective vertical load (Fz);
- a data collection system (12), connected to the control circuitry (8) and configured to collect a plurality of data on vehicular dynamics;
- a braking system (13), itself comprising at least one braking element (14) that can be actuated by the driver (DR) to request braking, in particular a pedal; the braking system (13) being connected to the control circuitry (8) and configured to be controlled by it;
wherein the control circuitry (8) is also configured for
controlling the braking system (13), following a braking request from the driver (DR) via the braking element (14), to actuate in regenerative electric braking, by delivering a respective first braking torque (eBT), each driving wheel and then the respective electric motor (7), according to the plurality of data (DD) on vehicular dynamics and respective maximum braking capacity (MRT) values, so as to generate regenerative electrical energy;
and storing the regenerative electrical energy generated by the regenerative braking of each wheel (4, 5) in a vehicular electrical energy storage system (16).

13. Road vehicle (1) according to claim 12, wherein the control circuitry (8) is configured to carry out the method according to any of claims 1 to 7.

14. Road vehicle (1) according to claim 12, wherein the braking system (13) also comprises a hydraulic unit (18), and mechanical brakes, controlled by the hydraulic unit (18); wherein the control circuitry (8) is configured to control the braking system (13) to actuate, to aid in regenerative braking, in addition to the respective first braking torque (eBT), the hydraulic unit (18) to exert a second braking torque (mBT) on each wheel (4, 5).

15. Road vehicle (1) according to claim 14, wherein the control circuitry (8) is configured to perform the method according to any one of claims 8 to 11.
